# EUROPÄISCHE PATENTSCHRIFT

(11) **EP 1 687 351 B1**
(45) Veröffentlichungstag und Bekanntmachung des Hinweises auf die Patenterteilung: **15.02.2012**
(21) Anmeldenummer: 04817388.4
(22) Anmeldetag: 22.10.2004
(51) Int. Cl.: C08J 5/16, C08J 3/28, C08F 259/08, C08F 8/06, C08F 291/18, C08F 8/00

(54) **MODIFIZIERTE PERFLUOR-KUNSTSTOFFE UND VERFAHREN ZU IHRER HERSTELLUNG**
MODIFIED PERFLUOROPLASTICS, AND METHOD FOR THE PRODUCTION THEREOF
Matières plastiques perfluorées modifiées et procédé pour les produire

(30) Priorität: 30.10.2003 DE 10351812
(43) Veröffentlichungstag der Anmeldung: 09.08.2006
(73) Patentinhaber: Leibniz-Institut für Polymerforschung Dresden e.V., 01069 Dresden (DE)
(72) Erfinder: LEHMANN, Dieter, 01640 Coswig (DE)
(74) Vertreter: Rauschenbach, Marion
(86) Internationale Anmeldenummer: PCT/EP2004/052621
(87) Internationale Veröffentlichungsnummer: WO 2005/042597

(56) Entgegenhaltungen:
- FR-A- 2 494 702
- GB-A- 1 495 297
- US-A- 3 298 942
- US-A- 4 129 617
- US-A- 4 179 401
- US-A1- 2003 199 639

## Beschreibung

Die Erfindung bezieht sich auf das Gebiet der Chemie und betrifft modifizierte Perfluor-Kunststoffe, die beispielsweise in Tribowerkstoffen zur Anwendung kommen können und ein Verfahren zu ihrer Herstellung.

"Bei der Suche nach geeigneten Polymermaterialien für den Kernreaktorbau wurde festgestellt, daß PTFE - im Gegensatz zu seiner hohen chemischen und thermischen Stabilität - außerordentlich strahlenempfindlich ist. Es wird sowohl unter inerten Bedingungen als auch in Gegenwart von Sauerstoff schon bei geringer Energiedosis abgebaut, bereits bei 0,2 bis 0,3 kGy spröde und bei < 100 kGy bröckelig.
Ab etwa 360°C wird der rein strahlenchemische Abbau merklich von einem thermischen überlagert.
Wegen des stochastischen Verlaufs des strahlenchemischen Abbaus entstehen Reaktionsprodukte mit einem breiten Kettentängenspektrum.
Bei Bestrahlung von PTFE in Gegenwart von Sauerstoff werden aus den zunächst entstehenden Perfluoralkylradikalen Peroxy- und Alkoxyradikale gebildet.
Über die Zwischenstufe der Bildung des Alkoxyradikals wird das endständige Perfluoralkylradikal unter Kettenverkürzung und Bildung von Carbonyldifluorid schrittweise abgebaut.

Dagegen entstehen aus den seitenständigen Alkoxyradikalen Perfluoralkansäurefluoride und endständige Perfluoralkylradikale.

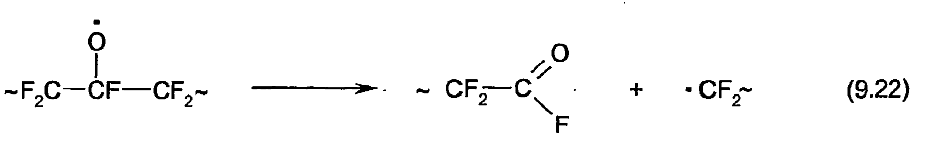

In sehr geringen Mengen werden auch perfluorierte Disäuren gebildet, da an einer Perfluorcarbonkette auch zwei seitenständige Radikalzentren entstehen können.
Ungesinterte, und unverpreßte PTFE-Emulsions- und -Suspensionspolymerisate sind von faserig-filzigem Charakter. Eine Übertragung z. B. der antiadhäsiven und Gleiteigenschaften des PTFE auf andere Medien durch Einarbeitung in wäßrige oder organische Dispersionen, Polymere, Farben, Lacke, Harze oder Schmierstoffe ist nicht möglich, weil dieses PTFE sich nicht homogenisieren läßt, sondern zur Klumpenbildung neigt, agglomeriert, aufschwimmt oder sich absetzt.
Durch die Einwirkung energiereicher Strahlung mit einer Energiedosis von etwa 100 kGy wird aus den faserig-filzigen Polymerisaten infolge partiellen Abbaus der Polymerketten ein rieselfähiges Feinpulver erhalten. Dieses Pulver enthält noch lockere Agglomerate, die leicht zu Primärteilchen mit < 5 µm Partikeldurchmesser zerteilt werden können. Bei Bestrahlung in Gegenwart von Reaktanten werden funktionelle Gruppen in das Polymere eingebaut Erfolgt die Bestrahlung in Luft, so werden nach GI. (9.22) (und anschließender Hydrolyse der -COF-Gruppen durch Luftfeuchtigkeit) Carboxylgruppen erhalten. Wird vor der Bestrahlung (NH₄)₂SO₃ zugemischt, dann sind S-haltige Gruppen zu erzielen. Diese funktionellen Gruppen mindern die Hydrophobie und Organophobie des PTFE so wesentlich, daß die gewonnenen Feinpulver gut mit anderen Medien homogenisiert werden können. Die positiven Eigenschaften des PTFE, wie die exzellenten Gleit-, Trenn- und Trockenschmiereigenschaften sowie die hohe chemische und thermische Stabilität, bleiben erhalten. Carboxyl- und Sulfogruppen, an die perfluorierte Kette gebunden, besitzen ebenfalls hohe chemische Inertheit.
Wegen der Unlöslichkeit des PTFE und seiner Abbauprodukte (mit Ausnahme der sehr niedermolekularen Produkte) können die üblichen Methoden der Molmassenbestimmung nicht angewandt werden. Die Molmassenbestimmung muß auf indirektem Wege erfolgen." [A. Heger et al., Technologie der Strahlenchemie an Polymeren, Akademie-Verlag Berlin 1990]
Nachteilig wirkt sich vielfach die Unverträglichkeit mit anderen Materialien aus. Durch eine chemische Aktivierung von PTFE durch die bekannten Verfahren mit (1.) Natriumamid in flüssigem Ammoniak und (2.) Alkalialkyl- und Alkali-Aromaten-Verbindungen in aprotischen inerten Lösungsmitteln ist eine Modifizierung zu erreichen. Über diese Modifizierungen können reaktiv oder auch nur über adsorptive Kräfte verbesserte Grenzflächenwechselwirkungen erreicht werden.

Die Verwertung der Produkte des PTFE-Abbaus erfolgt in vielfältigen Einsatzgebieten - so auch als Additiv zu Kunststoffen zum Zwecke der Erzielung von Gleit- oder Antihafteigenschaften. Die Feinpulversubstanzen liegen mehr oder minder fein dispergiert als Füllstoffkomponente in einer Matrix vor [Ferse et al., Plaste u. Kautschuk, 29 (1982), 458; Ferse et al. DD-PS 146 716 (1979)]. Beim Lösen der Matrixkomponente ist das PTFE-Feinpulver eliminierbar bzw. wird zurückerhalten.

Obwohl in den Einsatzgebieten von PTFE-Feinpulver eine Verbesserung der Eigenschaften im Vergleich zu den kommerziellen fluorcarbonfreien Additiven erreicht wird, ist die Unverträglichkeit, die Unlöslichkeit, die lockere Kopplung und auch inhomogene Verteilung für viele Einsatzgebiete von Nachteil.

Weiterhin bekannt sind gepfropfte fluorhaltige Kunststoffe (US 5,576,106), die aus fluorhaltigen Kunststoffpartikeln bestehen, an deren Oberfläche eine nichthomopolymerisierte ethylenisch ungesättigte Verbindung angepfropft ist. Dabei können die nichthomopolymerisierten ethylenisch ungesättigten Verbindungen Säuren, Ester oder Anhydride sein.
Hergestellt werden diese gepfropften fluorhaltigen Kunststoffe indem das mittels Schmelzverfahren hergestellte fluorhaltige Kunststoffpulver in Gegenwart der ethylenisch ungesättigten Verbindung einer Quelle von ionisierender Strahlung ausgesetzt wird. Dabei erfolgt die Anbindung der ethylenisch ungesättigten Verbindungen an die Oberfläche der fluorhaltigen Kunststoffpartikel.

Aufgabe der Erfindung ist es, modifizierte Perfluor-Kunststoffe anzugeben, welche in Bauteilen verarbeitet zu vergleichbaren Gleiteigenschaften und verbesserten Verschleißfestigkeiten führen und dadurch eine höhere Lebensdauer der Bauteile erreichbar ist, und weiterhin ein einfaches und leistungsfähiges Verfahren zur Herstellung derartiger modifizierter Perfluor-Kunststoffe anzugeben.

Die Aufgabe wird durch die in den Ansprüchen angegebene Erfindung gelöst. Weiterbildungen sind Gegenstand der Unteransprüche.

Die modifizierten Perfluor-Kunststoffe bestehen aus unter Sauerstoffeinfluss strahlenchemisch und/oder plasmachemisch modifizierten Perfluorpolymeren, deren Oberfläche gleichzeitig -COOH- und/oder -COF-Gruppen und reaktive Perfluoralkyl-(peroxy-)Radikal-Zentren aufweise, wobei über einige oder alle Gruppen und/oder an einige oder alle Zentren durch nachfolgende Reaktionen weitere niedermolekulare und/oder oligomere und/oder polymere Substanz(en) und/oder olefinisch ungesättigte Monomer(e) und/oder olefinisch ungesättigte Oligomer(e) und/oder olefinisch ungesättigte Polymer(e) oder Gemische davon gekoppelt sind.

Das Perfluorpolymer ist unter Sauerstoffeinfluss mit einer Strahlendosis von größer 50 kGy, vorteilhafterweise von größer 100 kGy strahlenchemisch modifiziert.

PTFE ist als Perfluorpolymer eingesetzt.

Von Vorteil ist auch, dass die nachfolgenden Reaktionen Radikalreaktionen und/oder Substitutionsreaktionen und/oder Additionsreaktionen sind.

Auch von Vorteil ist es, wenn an die reaktiven Perfluoralkyl-(peroxy-)Radikal-Zentren olefinisch ungesättigte Monomere und/oder olefinisch ungesättigte Oligomer(e) oder olefinisch ungesättigte Polymer(e) durch (Co-)Polymerisation und/oder durch Pfropfung gekoppelt sind.

Ebenfalls von Vorteil ist es, wenn über Reaktionen mit den -COOH- und/oder -COF-Gruppen Substanzen an die entstandenen Ester- und/oder Amidgruppen, an die vorteilhafterweise mindestens eine weitere funktionelle Gruppe gebunden ist, gekoppelt sind.

Weiterhin vorteilhaft ist es, wenn über Reaktionen mit den -COOH- und/oder -COF-Gruppen aliphatische Aminoverbindungen und/oder aromatische Aminoverbindungen und/oder Alkylaryl-Aminoverbindungen mit mindestens einer weiteren primären und/oder sekundären Aminogruppe oder mindestens einer weiteren reaktiven oder reaktiv modifizierbaren oder reaktiv aktivierbaren funktionellen Gruppe gekoppelt sind.

Und auch vorteilhaft ist es, wenn als weitere, reaktive oder reaktiv modifizierbare oder reaktiv aktivierbare funktionelle Gruppe Carbonsäureanhydrid, Carbonsäureanhydrid-Derivat, die auch als Dicarbonsäure- und/oder Carbonsäurehalbester-Verbindung zum Anhydrid recyclisierbar sind, -COOH, -CO-Halogen, -COOR, -CO-OOR, -O-CO-OR, -SO₃H? -SO₂NRR* -SO₂N₃, -SO₂-Halogen aliphatische und/oder aromatische -OH, aliphatische und/oder aromomatische -SH, (Meth-)Acrylester, (Meth-)Acrylamid-Derivat, (Meth-)Allyl und andere olefinisch ungesättigte polymerisierbare Verbindungen und/oder Polymere, Cyanhydrin, -NCO, -NH-CO-OR, -NH-CS-OR, -NR*-CO-NR**R***, -NR*-CS-NR**R***, -CHO, -COR gekoppelt sind, wobei R, R*, R** und/oder R*** Alkyl-Xₘ, Aryl-Xₙ oder Alkyaryl-Xₒ bedeuten oder wobei R, R*, R** und/oder R*** an N gebunden auch H bedeuten kann und wobei X gleiche oder auch verschiedene funktionelle Gruppen bedeuten und bei m, n und o mit Zahlen größer/gleich 0 bedeuten.

Von Vorteil ist es auch, wenn an die reaktiven Perfluoralkyl-(peroxy-)Radikal-Zentren olefinisch ungesättigte Monomere und/oder olefinisch ungesättigte Oligomere oder olefinisch ungesättigte Polymere durch (Co-)Polymerisation und/oder durch Pfropfung gekoppelt sind und über Reaktionen mit den -COOH- und/oder -COF-Gruppen Substanz(en) an die entstandenen Ester- und/oder Amidbindungen gekoppelt sind und über Reaktionen mit den -COOH- und/oder -COF-Gruppen aliphatische Aminoverbindungen und/oder aromatische Aminoverbindungen und/oder Alkylaryl-Aminoverbindungen mit mindestens einer weiteren primären und/oder sekundären Aminogruppe oder mindestens einer weiteren reaktiven oder reaktiv modifizierbaren oder reaktiv aktivierbaren funktionellen Gruppe gekoppelt sind.

Bei dem erfindungsgemäßen Verfahren zur Herstellung von modifizierten Perfluor-Kunststoffen werden unter Sauerstoffeinfluss strahlenchemisch oder plasmachemisch modifizierte Perfluorpolymere, die gleichzeitig -COOH- und/oder - COF-Gruppen und reaktive Perfluoralkyl-(peroxy-)Radikal-Zentren aufweisen, durch Substitutionsreaktionen und/oder durch Additionsreaktionen und/oder durch Radikalreaktionen reaktiv mit niedermolekularen und/oder oligomeren und/oder polymeren Substanz(en) und/oder olefinisch ungesättigten Monomer(en) und/oder olefinisch ungesättigten Oligomer(en) und/oder olefinisch ungesättigten Polymer(en) umgesetzt.

Vorteilhafterweise wird das Perfluorpolymer strahlenchemisch mit einer Strahlendosis von größer 50 kGy, noch vorteilhafterweise mit einer Strahlendosis von größer 100 kGy modifiziert.

PTFE in kompakter oder Pulverform wird als Perfluorpolymer eingesetz.

Ebenfalls vorteilhafterweise wird das strahlenchemisch modifizierte Perfluorpolymer als Pulver durch nachfolgendes Tempern bei niedrigen Temperaturen, noch vorteilhafterweise unter Luft unter Erhalt der -COF-Gruppen und der reaktiven Perfluoralkyl-(peroxy-)Radikal-Zentren behandelt.

Es ist von Vorteil, wenn das strahlenchemisch modifizierte Perfluorpolymer mit olefinisch ungesättigten Monomer(en) und/oder olefinisch ungesättigten Oligomer(en) und/oder olefinisch ungesättigten Polymer(en) umgesetzt wird.

Auch ist es von Vorteil, wenn die -COOH und/oder -COF-Gruppen mit niedermolekularen und/oder oligomeren und/oder polymeren Substanz(en), die primäre und/oder sekundäre Aminogruppen und/oder Hydroxygruppen und/oder Amidgruppen und/oder Harnstoffgruppen und/oder Isocyanatgruppen und/oder blockierte/geschützte Isocyanatgruppen und/oder Urethangruppen und/oder Uretdiongruppen enthalten, mit mindestens einer weiteren funktionellen Gruppe im (Makro-)Molekül, die zu chemischen Folgereaktionen befähigt sind, bei Temperaturen > 150°C reaktiv umgesetzt werden.

Weiterhin ist es von Vorteil, wenn die -COOH- und/oder -COF-Gruppen in einer reaktiven Umsetzung mit niedermolekularen und/oder oligomeren und/oder polymeren Substanz(en), die primäre und/oder sekundäre Aminogruppen und/oder Hydroxygruppen enthalten, mit mindestens einer weiteren funktionellen Gruppe im (Makro-)Molekül, die zu chemische Folgereaktionen befähigt sind, bei Temperaturen > 150°C reaktiv umgesetzt werden.

Weiterhin ist es von Vorteil, wenn die -COOH- und/oder -COF-Gruppen in einer reaktiven Umsetzung mit niedermolekularen und/oder oligomeren und/oder polymeren Substanz(en), die Hydroxygruppen und/oder Epoxygruppen enthalten, mit mindestens einer weiteren funktionellen Gruppe im (Makro-)Molekül, die zu chemische Folgereaktionen befähigt sind, bei Temperaturen > 150°C reaktiv umgesetzt werden.

Ebenfalls ist es von Vorteil, wenn die -COF-Gruppen mit einer Lactamverbindung oder einer Alkoholverbindung umgesetzt werden.

Und auch von Vorteil ist es, wenn die -COOH und/oder -COF-Gruppen mit niedermolekularen und/oder oligomeren und/oder polymeren Substanz(en), die Amidgruppen und/oder Harnstoffgruppen und/oder Isocyanatgruppen und/oder blockierte/geschützte Isocyanatgruppen und/oder Urethangruppen und/oder Uretdiongruppen enthalten, mit mindestens einer weiteren funktionellen Gruppe im (Makro-)Molekül, die zu chemische Folgereaktionen befähigt sind, bei Temperaturen ≥ 200°C reaktiv umgesetzt werden.

Und ebenfalls ist es von Vorteil, wenn das strahlenchemisch modifizierte Perfluorpolymer-Pulver mit reaktiven Perfluoralkyl-(peroxy-)Radikal-Zentren mit olefinisch ungesättigten Monomeren und/oder olefinisch ungesättigten Oligomeren und/oder olefinisch ungesättigten Polymeren umgesetzt wird und die -COOH und/oder -COF-Gruppen mit niedermolekularen und/oder oligomeren und/oder polymeren Substanzen, die primäre und/oder sekundäre Aminogruppen und/oder Hydroxygruppen und/oder Amidgruppen und/oder Harnstoffgruppen und/oder Isocyanatgruppen und/oder blockierte/geschützte Isocyanatgruppen und/oder Urethangruppen und/oder Uretdiongruppen enthalten, mit mindestens einer weiteren funktionellen Gruppe im (Makro-)Molekül, die zu chemische Folgereaktionen befähigt sind, bei Temperaturen > 150°C reaktiv umgesetzt werden oder die -COOH-und/oder -COF-Gruppen in einer reaktiven Umsetzung mit niedermolekularen und/oder oligomeren und/oder polymeren Substanzen, die Hydroxygruppen und/oder Epoxygruppen enthalten, mit mindestens einer weiteren funktionellen Gruppe im (Makro-)Molekül, die zu chemische Folgereaktionen befähigt sind, bei Temperaturen > 150°C reaktiv umgesetzt werden oder die -COF-Gruppen mit einer Lactamverbindung oder einer Alkoholverbindung umgesetzt werden.

Bei der vorteilhafterweise strahlenchemischen Modifizierung von Perfluorpolymer entstehen der reaktiven Perfluoralkyl-(peroxy-)Radikal-Zentren, die überraschenderweise zur Kopplung von Monomere(n) und/oder Polymere(n) durch Radikalreaktionen, die zu Substitutionsreaktionen und/oder zu Additionsreaktionen befähigt sind. Mit einer Plasmabehandlung können oberflächlich ähnliche reaktive Perfluoralkyl-(peroxy-)Radikal-Zentren erzeugt und für diese Kopplungsreaktion eingesetzt werden, jedoch sind diese reaktiven Perfluoralkyl-(peroxy-)Radikal-Zentren in ihrer Verteilung und Dichte im Vergleich zu den strahlenchemisch hergestellten reaktiven PerFluoralkyl-(peroxy-)Radikal-Zentren nicht optimal. So konnte über IR-Spektroskopie nach der PTFE-Mikropulvermodifizierung mit Monomeren in Lösung nach der Abtrennung und Reinigung dieser PTFE-Mikropulver eine chemische Kopplung von Homo-, Co- oder Terpolymeren je nach Einstellung des Modifizierungsansatzes nachgewiesen werden, d. h. die Polymerketten waren über Extraktion vom PTFE nicht mehr abtrennbar. Im Vergleich zu PTFE-Mikropulvem ohne reaktive Perfluoralkyl-(peroxy-)Radikal-Zentren oder auch in Gegenwart von ungebundenen Radikal-Initiatoren bildeten sich keine modifizierten PTFE-Mikropulver; das PTFE-Mikropulver konnte in Substanz quantitativ und unverändert abgetrennt werden.
Bei der erfindungsgemäßen Lösung werden an die gleichzeitig vorliegenden reaktive Perfluoralkyl-(peroxy-)Radikal-Zentren und -COOH- und/oder -COF-Gruppen Monomere und/oder Polymere oder deren Gemische gepfropft/chemisch gekoppelt.

Entsprechend der anpolymerisierten Pfropfaststruktur ist für den Fachmann jeweils ableitbar, ob über eine Kompatibilisierung und/oder in einer folgenden chemischen Umsetzung/Modifizierung mit Polymeren die Einbindung/Kompatibilisierung dieser modifizierten Perfluor-Kunstoffe mit der Matrix realisiert wird, die zu einer Verbesserung der Material- und der Gleitreibungseigenschaften sowie zur Erhöhung der Verschleißfestigkeit im Vergleich zu den unmodifizierten Ausgangsstoffen und den physikalischen Mischungen aus reinem Perfluorpolymer und Kunststoffen führt.

Ein besonderer Vorteil der erfindungsgemäßen Lösung besteht darin, dass an die über eine Ester- und/oder Amidbindung an die modifizierten Perfluor-Kunststoffe gekoppelten Substanzen mit mindestens einer weiteren, reaktiven oder reaktiv modifizierbare oder reaktiv aktivierbaren funktionellen Gruppe Polymere ankoppelbar sind und/oder über eine Polymeraufbaureaktion aus niedermolekularen Substanzen Polymerketten am modifizierten Perfluor-Kunststoff, bevorzugt als Pulver, ankoppelbar sind, die zu einer Verbesserung der Materialeigenschaften sowie zur Erhöhung der Verschleißfestigkeit im Vergleich zu den unmodifizierten Ausgangsstoffen und den physikalischen Mischungen mit reinen Perfluor-Kunststoffen führt.

Zur Verbesserung der Verschleißfestigkeit ist es weiter vorteilhaft, die modifizierten Perfluor-Kunststoffe, die mit Monomeren und/oder Polymeren oder deren Gemischen gekoppelt sind, gleichzeitig als Speichermedium für PFPE-Additive (PFPE - Perfluorpolyether) zu nutzen, das mit der Matrix unverträglich ist und zur Erniedrigung des Reibungskoeffizienten bei gleichzeitiger Erhöhung der Verschleißfestigkeit beiträgt.

Erfindungsgemäß hergestellt werden die erfindungsgemäßen modifizierten Perfluor-Kunststoffe, indem beispielsweise PTFE-Emulsionspolymerisat (TF 2025 von Dyneon) und PTFE-Suspensionspolymerisat (TF 1750 von Dyneon) an Luft mit 500 kGy bestrahlt werden. Während der Bestrahlung in 50 kGy-Schritten unter Sauerstoffeinfluss zum Abbau zu einem PTFE-Mikropulver werden reaktive PTFE-Radikal-Zentren und -COOH- und/oder -COF-Gruppen erzeugt. Diese reaktiven PTFE-Radikal-Zentren werden nach dem Stand der Technik durch Tempern bei höheren Temperaturen beseitigt, da dies zur Stabilisierung des PTFE-Mikropulver dient. Ebenfalls wurden die -COF-Gruppen beim Tempern durch Einfluss der Luftfeuchtigkeit weitgehend zu den -COOH-Gruppen umgewandelt.

Nach der vorliegenden Erfindung wird das Tempern nur bei niedrigen Temperaturen und unter Luft so durchgeführt, dass die reaktiven Perfluoralkyl-(peroxy-)Radikal-Zentren und vorhandenen -COF- und -COOH-Gruppen möglichst vollständig erhalten bleiben Die Perfluoralkyl-(peroxy-)Radikal-Zentren können gezielt für die Kopplung mit Radikalreaktionen mit olefinisch ungesättigten Monomeren und/oder Oligomeren und/oder Polymeren zur Pfropfung genutzt werden. Die -COF- und/oder -COOH-Gruppen können gezielt zur Kopplung von Agenzien/Substanzen, die mindestens eine weitere, reaktive oder reaktiv modifizierbare oder reaktiv aktivierbare funktionelle Gruppe besitzen, über Additions- und/oder Substitutionsreaktionen genutzt werden. Die Mono- und/oder Polymere, die an die entstandenen reaktiven Peffluoralkyl-(peroxy-)Radikal-Zentren und die Substanzen, die an -COOH- und/oder -COF-Gruppen ankoppelbar sind, können mit (di- oder poly-)funktionellen, mit gleichen oder verschiedenen reaktiven Gruppen ausgerüstet sein, wobei davon auch funktionelle Gruppen für Folgereaktionen zur (Oberflächen-)Modifizierung der Perfluor-Kunststoffe, bevorzugt als Pulver, geeignet sein können. Die Kopplung dieser Monomere und/oder Oligomere und/oder Polymere kann dabei in Dispersion oder in Substanz oder während der Schmelzemodifizierung/Schmelzeverarbeitung in Schmelze durchgeführt werden. Auf diese Weise können radikalisch gekoppelte Perfluor-Kunststoffe hergestellt werden.

Unter Dispersion soll erfindungsgemäß verstanden werden, dass ein Perfluorpolymer-Pulver oder Perfluor Kunststoff Pulver in einer Flüssigkeit ungelöst vorliegt und das Monomer-(Gemisch) die Flüssigkeit bildet oder gelöst in der Flüssigkeit vorliegt. Im Unterschuss an Flüssigkeit kann die Dispersion auch als pastöse Masse vorliegen.
Als radikalische Kopplung/reaktive Umsetzung in Substanz wird verstanden, dass ein Perfluorpolymer-Pulver oder Perfluor Kunststoff Pulver als verwirbeltes oder fluidisiertes Pulver vorteilhafterweise unter Inertgas in Gegenwart eines Monomer-(Gemisches) zum erfindungsgemäßen modifizierten Perfluor Kunststoff als Pulver umgesetzt wird.

Neben dem PTFE können alle weiteren Perfluorpolymer-Verbindungen, die in einer Strahlen- und/oder Plasmamodifizierung unter Sauerstoffeinfluss reaktive Perfluoralkyl-(peroxy-)Radikal-Zentren und -COOH- und/oder -COF-Gruppen bilden und besitzen, nach einer Bestrahlung und/oder Plasmabehandlung erfindungsgemäß eingesetzt und modifiziert/reaktiv umgesetzt werden. Unter Perfluorpolymer-Verbindungen sollen alle perfluorierten Oligomere und Polymere ohne Wasserstoffatome in der Haupt- und Seitenkette, außer den Protonen an der Carbonsäurefunktion als -COOH, verstanden werden, wobei auch ein Teil der C-C-Bindungen über eine Etherbrücke realisiert sein kann. Dazu zählen beispielsweise PTFE (Polytetrafluorethylen), FEP (Poly[tetrafluorethylen-co-hexafluorpropylen]) und PFA (Poly[tetrafluorethylen-co-perfluoropropylvinylether]), sowie Teflon®AF (DuPont) und Cytop® , als eine spezielle Untergruppe der Fluorpolymere.

Selbstverständlich kann die Umsetzung in Schmelze oder in Lösung nur mit solchen strahlen- und/oder plasmamodifizierten Perfluorpolymeren, erfolgen, die in Lösung gehen oder in eine Schmelze umgewandelt werden können und so mit den niedermolekularen Substanzen und/oder Oligomeren und/oder Polymeren umgesetzt werden können.

Durch die Kopplung weisen die durch Radikalreaktionen und/oder durch Substitutionsreaktionen und/oder durch Additionsreaktionen modifizierten Perfluor-Kunststoffe nach Einarbeitung in eine Matrix verbesserte mechanische und tribologische Eigenschaften auf. Der Einsatz der erfindungsgemäßen modifizierten Perfluor-Kunststoffe ist vor allem von Interesse bei Vorgängen, bei denen Gleitreibungsprozesse eine Rolle spielen. Durch die durch Radikalreaktionen und/oder durch Substitutionsreaktionen und/oder durch Additionsreaktionen realisierte Kopplung und/oder Kompatibilisierung mit dem Matrix-Material wird eine gute Anbindung und eine Verbesserung der Verschleißfestigkeit erreicht, da das PTFE-Korn bei mechanischer Belastung nicht aus dem Matrix-Material herausgerieben werden kann.

Da die vorteilhafterweise modifizierten PTFE-Substanz-/Monomer/PolymerVerbindungen entweder mit Pfropf-Polymerästen mit der Matrix in direkter Wechselwirkung stehen und/oder über chemische Bindungen mit der Matrix durch reaktive Umsetzung in direkte Wechselwirkung gebracht worden sind, werden im Vergleich zu den physikalischen Mischungen je nach Anbindungsgrad auch verbesserte Materialeigenschaften beobachtet.

Mit der erfindungsgemäßen Lösung werden neue Materialien erhalten, die bei vergleichbaren Gleitreibungskoeffizienten verbesserte Verschleißfestigkeiten, d. h. eine erhöhte Lebensdauer in den Anwendungen aufweisen. Ferner wird durch Zugabe von perfluorierten Ölen wie PFPE (Perfluorpolyether) eine weitere Erniedrigung der Gleitreibungskoeffzienten und eine spürbare Verbesserung der Verschleißfestigkeit erzielt, wobei die erfindungsgemäßen vorteilhafterweise modifizierten PTFE-Monomer/Polymer-Verbindungen zusätzlich als Speichermedium fungieren.

Im weiteren wird die Erfindung an mehreren Ausführungsbeispielen näher erläutert

### Vergleichsbeispiel 1

### PTFE-Mikropulver mit Styrol und Oligoamid

In einem Literkolben werden 100 g PTFE-Polymerisat (Zonyl MP 1600 - Polymerisat unbestrahlt, DuPont, unbehandelt) in 500 ml ε-Caprolactam bei 100°C dispergiert/gerührt, entgast und mit Reinststickstoff gespült. Zur PTFE-ε-Caprolactam-Dispersion werden bei 100°C 50 ml Styrol (frisch destilliert) zudosiert und 4 Stunden gerührt. Anschließend wird der Ansatz unter Rühren 4 Stunden auf 240°C erwärmt. Das ε-Caprolactam dient dabei als Lösemittel.
Der Feststoff aus der Dispersion wird abgetrennt und abwechselnd gründlich einmal mit DMAc und danach mit Ameisensäure gewaschen. Nach mehrfacher Durchführung der Prozedur wird mit Methanol gewaschen und getrocknet.
Die IR-Auswertung der abgetrennten gereinigten PTFE-Mikropulver ergab, dass mit dem unbestrahlten und unbehandelten PTFE-Mikropulver nur reines/unmodifiziertes PTFE im IR-Spektrum nachweisbar war, d. h. es fand keine Pfropf- bzw. Kopplungsreaktion statt. Die PTFE-Materialien wurden mit 10 Ma.-% in SEBS und auch in PA-6 im Laborkneter eingearbeitet und die tribologischen Eigenschaften untersucht. Diese Materialien wurden als Vergleichssubstanzen für die tribologischen Untersuchungen eingesetzt.

### Beispiel 1

### Modifizierung von bestrahltem PTFE-Emulsionspolymerisat mit Styrol und Oligoamid

Versuchsdurchführung und Aufarbeitung erfolgte analog Vergleichsbeispiel 1, es werden jedoch 100 g PTFE-Emulsionspolymerisat (TF 2025 von Dyneon), die mit 500 kGy bestrahlt wurden, verwendet.
Die IR-spektroskopische Untersuchung des gereinigten Festproduktes ergab sehr starke Polystyrol- und starke (Oligo-/Poly-)Amid-Absorptionen neben dem PTFE als Nachweis für die chemisch Kopplung zwischen PTFE, Polystyrol und Oligo-/Polyamid. Im Vergleichsbeispiel 1 war nur reines PTFE im IR-Spektrum nachweisbar.
Das so modifizierte PTFE-Material wurde mit 10 Ma.-% in SEBS im Laborkneter eingearbeitet und die tribologischen Eigenschaften untersucht Die Reibungskoeffizienten im Klötzchen/Ring-Versuch waren in erster Näherung mit dem Vergleichsbeispiel 1 vergleichbar - dagegen zeigte das modifizierte PTFE-Material im Compound mit SEBS eine starke Erniedrigung des Verschleißwertes auf 55 % im Vergleich zur physikalischen Mischung mit SEBS (Vergleichsbeispiel 1).

### Beispiel 2

### Modifizierung von bestrahltem PTFE-Suspensionspolymerisat mit Styrol und Oligoamid

Versuchsdurchführung und Aufarbeitung erfolgte analog Vergleichsbeispiel 1, es werden jedoch 100 g PTFE-Suspensionspolymerisat (TF 1750 von Dyneon), die mit 500 kGy bestrahlt wurden, verwendet.
Die IR-spektroskopische Untersuchung des gereinigten Festproduktes ergab Polystyrol- und starke (Poly-)Amid-Absorptionen neben dem PTFE als Nachweis für die chemisch Kopplung zwischen PTFE, Polystyrol und Oligo-/Polyamid. Im Vergleichsbeispiel 1 war nur reines PTFE im IR-Spektrum nachweisbar.
Das so modifizierte PTFE-Material wurde mit 10 Ma.-% in PA-6 im Laborkneter eingearbeitet und die tribologischen Eigenschaften untersucht. Die Reibungskoeffizienten im Klötzchen/Ring-Versuch waren in erster Näherung mit dem Vergleichsbeispiel 1 vergleichbar - dagegen zeigte das modifizierte PTFE-Material im Compound mit PA-6 eine Erniedrigung des Verschleißwertes auf 45 % im Vergleich zur physikalischen Mischung mit PA-6 (Vergleichsbeispiel 1).

### Beispiel 3

### Modifizierung von plasmabehandeltem PTFE-Polymerisat mit Styrol und Oligoamid

Versuchsdurchführung und Aufarbeitung erfolgte analog Vergleichsbeispiel 1, es werden jedoch 100 g PTFE-Polymerisat (Zonyl MP 1600 - Polymerisat unbestrahlt, DuPont, plasmabehandelt), verwendet.
Die IR-spektroskopische Untersuchung des gereinigten Festproduktes ergab sehr Polystyrol- und (Poly-)Amid-Absorptionen neben dem PTFE als Nachweis für die chemisch Kopplung zwischen PTFE, Polystyrol und Oligo-/Polyamid. Im Vergleichsbeispiel 1 war nur reines PTFE im IR-Spektrum nachweisbar.
Das so modifizierte PTFE-Material wurde mit 10 Ma.-% in SEBS im Laborkneter eingearbeitet und die tribologischen Eigenschaften untersucht. Die Reibungskoeffizienten im Klötzchen/Ring-Versuch waren in erster Näherung mit dem Vergleichsbeispiel 1 vergleichbar - dagegen zeigte das modifizierte PTFE-Material im Compound mit SEBS eine Erniedrigung des Verschleißwertes auf 75 % im Vergleich zur physikalischen Mischung (Vergleichsbeispiel 1).

### Beispiel 4:

### Modifizierung von bestrahltem PTFE-Emulsionspolymerisat - Gemisch aus Styrol und Maleinsäureanhydrid und Folgeumsetzung mit ε-Caprolactam

In einem Literkolben werden 100 g des frisch unter Sauerstoffeinfluss elektronenbestrahlten PTFE-Emulsionspolymerisat (TF 2025 von Dyneon, mit 500 kGy bestrahlt) in 500 ml NMP bei Raumtemperatur dispergiert/gerührt, entgast und mit Reinststickstoff gespült.
(a) Die Dispersion wird auf 100°C erwärmt. Es werden 25 ml Styrol und 25 g Maleinsäureanhydrid zudosiert und 4 Stunden gerührt. Anschließend werden 50 g ε-Caprolactam zudosiert, die Temperatur unter Rühren auf 200°C erhöht und 8 Stunden gerührt. Der Feststoff aus der Dispersion wird abgetrennt, mit Methanol gewaschen und getrocknet.
(b) Die Dispersion wird auf 100°C erwärmt. Es werden 25 ml Styrol und 25 g Maleinsäureanhydrid zudosiert und 4 Stunden gerührt. Der Feststoff aus der Dispersion wird abgetrennt und gründlich mit DMAc gewaschen. Anschließend wird das Produkt mit 300 g geschmolzenem ε-Caprolactam versetzt und bei 240°C 8 Stunden gerührt, der Feststoff wird abgetrennt und mit Methanol gewaschen und getrocknet.
Die IR-Auswertung der abgetrennten gereinigten modifizierten PTFE-Pulver ergab in (a) und auch in (b) chemisch gekoppeltes PTFE-{Styrol-N(ε-capronsäure)maleimid}-oligoamid-Terpolymer neben den PTFE-Absorptionen.
Die so modifizierten PTFE-Materialien wurden mit 10 Ma.-% in PA-6 im Laborkneter eingearbeitet und die tribologischen Eigenschaften untersucht. Die Reibungskoeffizienten im Klötzchen/Ring-Versuch waren in erster Näherung mit dem Vergleichsbeispiel 1 vergleichbar - dagegen zeigten die modifizierten PTFE-Materialien im Compound mit PA-6 eine Erniedrigung des Verschleißwertes auf 60 % im Vergleich zur physikalischen Mischung mit PA-6 (Vergleichsbeispiel 1).

### Vergleichsbeispiel 2:

### PTFE-Mikropulver mit ε-Caprolactam

In einem Literkolben werden 100 g des PTFE-Mikropulver (TF 9205, thermisch abgebaut, Dyneon) in einer Schmelze/Lösung in 500 ml ε-Caprolactam dispergiert/gerührt, entgast und mit Reinststickstoff gespült. Die Dispersion wird auf 250°C erwärmt und 8 Stunden gerührt.
Der Feststoff wird abgetrennt und gründlich mit DMAc und danach mit Methanol gewaschen und getrocknet.
Die IR-Auswertung des abgetrennten gereinigten PTFE-Mikropulvers ergab, dass nur reines PTFE im IR-Spektrum nachweisbar war, d. h. es fand keine Reaktion zwischen PTFE und dem ε-Caprolactam statt.
Nach der Einarbeitung von 15 Ma.-% des PTFE-Mikropulvers in ein Epoxidharz und nach der Vernetzung in Form einer Platte und Herstellung von Probekörpern wurden tribologische Untersuchungen im Klötzchen/Ring-Versuch durchgeführt. Dieses Material wurde als Vergleichssubstanz für die tribologischen Untersuchungen eingesetzt.

### Beispiel 5:

### Modifizierung von bestrahltem PTFE-Emulsionspolymerisat mit ε-Caprolactam

Versuchsdurchführung und Aufarbeitung erfolgte analog Vergleichsbeispiel 2, es werden jedoch 100 g PTFE-Emulsionspolymerisat (TF 2025 von Dyneon, mit 500 kGy bestrahlt) verwendet.
Die IR-Auswertung des abgetrennten gereinigten PTFE-Pulvers ergab, dass chemisch gekoppeltes PTFE-Oligoamid-Pfropfcopolymer vorlag, d. h. es fand eine Reaktion zwischen PTFE und dem ε-Caprolactam statt. Es lagen Amid-Absorptionen im IR neben dem PTFE vor bei gleichzeitigem Verschwinden der -COOH und -COF-Absorptionen im Spektrum. Im Vergleichsbeispiel 2, d. h. im Ansatz mit unbestrahltem und unbehandeltem PTFE-Mikropulver war nur reines PTFE im IR-Spektrum nachweisbar.
Nach der Einarbeitung von 15 Ma.-% an modifiziertem PTFE-Mikropulver in ein Epoxidharz und nach der Vernetzung in Form einer Platte und Herstellung von Probekörpern wurden tribologische Untersuchungen im Klötzchen/Ring-Versuch durchgeführt. Die tribologischen Untersuchungen ergaben, dass das chemisch modifizierte PTFE-Oligoamid-Material vergleichbare Gleitreibungskoeffizienten zur den physikalischen Mischung aufweist, dass aber eine erhöhte Verschleißfestigkeit zu beobachten ist. Der Verschleiß beim Klötzchen/Ring-Versuch mit dem chemisch gekoppelten Material wies eine Senkung des Verschleißes auf 55 % im Vergleich zum den Material im Vergleichsbeispiel 2 auf.

### Beispiel 6:

### Modifizierung von bestrahltem PTFE-Suspensionspolymerisat mit ε-Caprolactam

Versuchsdurchführung und Aufarbeitung erfolgte analog Vergleichsbeispiel 2, es werden jedoch 100 g PTFE-Suspensionspolymerisat (TF 1750 von Dyneon, mit 500 kGy bestrahlt)verwendet.
Die IR-Auswertung des abgetrennten gereinigten PTFE-Mikropulvers ergab, dass chemisch gekoppeltes PTFE-Oligoamid-Pfropfcopolymer vorlag, d. h. es fand eine Reaktion zwischen PTFE und dem ε-Caprolactam statt. Es lagen Amid-Absorptionen im IR neben dem PTFE vor bei gleichzeitigem Verschwinden der -COOH und -COF-Absorptionen im Spektrum. Im Vergleichsbeispiel 2, d. h. im Ansatz mit unbestrahltem und unbehandeltem PTFE-Mikropulver war nur reines PTFE im IR-Spektrum nachweisbar.
Nach der Einarbeitung von 15 Ma.-% an modifiziertem PTFE-Mikropulver in ein Epoxidharz und nach der Vernetzung in Form einer Platte und Herstellung von Probekörpern wurden tribologische Untersuchungen im Klötzchen/Ring-Versuch durchgeführt. Die tribologischen Untersuchungen ergaben, dass das chemisch modifizierte PTFE-Oligoamid-Material vergleichbare Gleitreibungskoeffizienten zur den physikalischen Mischung aufweist, dass aber eine erhöhte Verschleißfestigkeit zu beobachten ist. Der Verschleiß beim Klötzchen/Ring-Versuch mit dem chemisch gekoppelten Material wies eine Senkung des Verschleißes auf 65 % im Vergleich zum den Material im Vergleichsbeispiel 2 auf.

### Beispiel 7:

### Modifizierung von PTFE-Emulsionspolymerisat mit ε-Caprolactam und GMA

In einem Literkolben werden 100 g des PTFE-Mikropulvers [PTFE-Emulsionspolymerisat (TF 2025 von Dyneon, mit 500 kGy bestrahlt)] in einer Schmelze/Lösung in 500 ml ε-Caprolactam dispergiert/gerührt, entgast und mit Reinststickstoff gespült.
Die Dispersion wird auf 250°C erwärmt und 8 Stunden gerührt Die Dispersion wird auf 100°C abgekühlt und es werden katalytische Mengen an 2-Methylimidazol, 2 g Stabilisator und 20 ml Glycidylmethacrylat (GMA) zugegeben und weitere 4 Stunden unter Stickstoff gerührt. Der Feststoff wird abgetrennt und gründlich mit DMAc und danach mit Methanol gewaschen und getrocknet. Die IR-Auswertung des abgetrennten modifizierten PTFE-Mikropulvers ergab chemisch gekoppeltes PTFE-Oligoamid, an das GMA gekoppelt war. In einer Copolymerisation mit Styrol unter Zugabe eines Radikalkettenstarters konnte über IR eine Pfropfung/Kopplung mit Polystyrol nachgewiesen werden. In einer Vergleichsuntersuchung am Produkt, das nach der thermischen Behandlung 8 Stunden bei 250°C war eine Styrolkopplung am PTFE-Mikropulver nicht nachweisbar.
Das so modifizierte PTFE-Material wurde mit 10 Ma.-% in SEBS im Laborkneter eingearbeitet und die tribologischen Eigenschaften untersucht. Die Reibungskoeffizienten im Klötzchen/Ring-Versuch waren in erster Näherung mit dem Vergleichsbeispiel 1 vergleichbar - dagegen zeigte das modifizierte PTFE-Material im Compound mit SEBS eine Erniedrigung des Verschleißwertes auf 70 % im Vergleich zur physikalischen Mischung (Vergleichsbeispiel 1).

### Beispiel 8:

### Modifizierung von PTFE-Emulsionspolymerisat GMA

In einem Literkolben werden 100 g des PTFE-Emulsionspolymerisat (TF 2025 von Dyneon, mit 500 kGy bestrahlt) in einer Schmelze/Lösung in 500 ml DMAc dispergiert/gerührt, entgast und mit Reinststickstoff gespült.
Zur Dispersion werden bei 100°C 20 ml Glycidylmethacrylat (GMA) zudosiert und 8 Stunden gerührt. Der Feststoff wird abgetrennt und gründlich mit DMAc und danach mit Methanol gewaschen und getrocknet. Die IR-Auswertung des abgetrennten modifizierten PTFE-Mikropulvers ergab, dass an das PTFE Poly-GMA mit reaktiven Epoxygruppen chemisch gekoppelt vorlag. In einer Schmelzemodifizierungsreaktion des PTFE-{Poly-GMA}-Pulvers mit Carboxylgruppen-enthaltendem PBT in einem Laborkneter konnte eine Pfropfung/Kopplung mit PBT nachgewiesen werden.
Das so modifizierte PTFE-Material wurde mit 10 Ma.-% in PBT im Laborkneter eingearbeitet und die tribologischen Eigenschaften untersucht. Die Reibungskoeffizienten im Klötzchen/Ring-Versuch waren in erster Näherung mit dem Material aus unmodifiziertem PTFE-Pulver und PBT vergleichbar - dagegen zeigte das modifizierte PTFE-Material im Compound mit PBT eine Erniedrigung des Verschleißwertes auf 40 % im Vergleich zur physikalischen Mischung mit PBT.

### Beispiel 9:

### Modifizierung von PTFE-Emulsionspolymerisat mit ε-Caprolactam und GMA

In einem Literkolben werden 100 g des PTFE-Emulsionspolymerisat (TF 2025 von Dyneon, mit 500 kGy bestrahlt) in einer Schmelze/Lösung in 500 ml ε-Caprolactam dispergiert/gerührt, entgast und mit Reinststickstoff gespült.
Zur Dispersion werden bei 100°C 20 ml Glycidylmethacrylat (GMA) zudosiert und 8 Stunden gerührt. Die Dispersion wird auf 240°C erwärmt und 4 Stunden unter Stickstoff gerührt. Der Feststoff wird abgetrennt und gründlich mit DMAc und danach mit Methanol gewaschen und getrocknet. Die IR-Auswertung des abgetrennten modifizierten PTFE-Mikropulvers ergab, dass an das PTFE Poly-GMA mit reaktiven Epoxygruppen und Oligoamid chemisch gekoppelt vorlag. In einer Schmelzemodifizierungreaktion mit Novolak in einem Laborkneter konnte eine Pfropfung/Kopplung mit dem Novolak nachgewiesen werden.
Die Verarbeitung dieses PTFE-Novolak-Systems zu Probekörpern und die tribologische Prüfung ergab, dass das Material einen vergleichbaren Reibungskoeffizienten und eine hohe Verschleißfestigkeit im Vergleich zum Vergleichsbeispiel 2, in dem jedoch Epoxidharz die Matrix bildet, aufwies.

### Beispiel 10:

### Modifizierung von PTFE-Emulsionspolymerisat mit p-Aminophenol

In einem Literkolben werden 100 g des PTFE-Emulsionspolymerisat (TF 2025 von Dyneon, mit 500 kGy frisch bestrahlt in Gegenwart von Luftsauerstoff) in 500 ml DMAc dispergiert/gerührt, entgast und mit Reinststickstoff gespült. Es werden 20 g p-Aminophenol zugegeben und bei 100°C 4 Stunden gerührt. Das Festprodukt wird abgetrennt und erst mit DMAc und dann mit Methanol gewaschen und getrocknet. Die IR-Auswertung des abgetrennten modifizierten PTFE-Mikropulvers ergab das als Amid chemisch gekoppelte p-Aminophenol am PTFE mit freien Phenolgruppen.
(a) In einer ersten Modifizierungsreaktion wurde GMA gekoppelt, das dann als Nachweis in einer Copolymerisation mit Styrol umgesetzt. Als Pfropfung/Kopplung konnten IR-spektroskopisch Polystyrol-Absorptionen nachgewiesen werden.
Die verpressten PTFE-Polystyrol-Produkte wiesen tribologisch sehr niedrige Reibungskoeffizienten, vergleichbar mit reinem PTFE und den Materialien aus Vergleichsbeispiel 1, und eine hohe Verschleißfestigkeit auf.
(b) In einer zweiten Modifizierungsreaktion wurde das PTFE-Pulver, an dem das p-Aminophenol gekoppelt wurde, zusammen mit 4,4'-Difluor-diphenylsulfon und 4,4'-Dihydroxy-diphenylether unter Zugabe eines Kondensationskatalysators nach bekannter Vorschrift zum Polysulfon umgesetzt. Nach der Abtrennung der löslichen Anteile an Polysulfon konnten am unlöslichen PTFE-Festprodukt IR-spektroskopisch Polysulfon-Absorptionsbanden nachgewiesen werden, d. h. das Polysulfon lag am PTFE chemisch gekoppelt vor.

Die verpressten PTFE-Polysulfon-Produkte wiesen tribologisch sehr niedrige Reibungskoeffizienten, vergleichbar mit reinem PTFE, und eine sehr hohe Verschleißfestigkeit auf.

### Beispiel 11:

### Modifizierung von PTFE-Emulsionspolymerisat mit 4,4'-Diaminodiphenylether

In einem Literkolben werden 100 g des PTFE-Emulsionspolymerisat (TF 2025 von Dyneon, mit 500 kGy frisch bestrahlt in Gegenwart von Luftsauerstoff) in 500 ml DMAc dispergiert/gerührt, entgast und mit Reinststickstoff gespült. Es werden 20 g 4,4'-Diaminodiphenylether zugegeben und bei 100°C 4 Stunden gerührt. Das Festprodukt wird abgetrennt und erst mit DMAc und dann mit Methanol gewaschen und getrocknet.
Die IR-Auswertung des abgetrennten modifizierten PTFE-Mikropulvers ergab das als Amid chemisch gekoppelte 4,4'-Diaminodiphenylether am PTFE.
In Folgereaktionen wurden an das modifizierte PTFE-Mikropulver als Nachweis
(a) GMA gekoppelt, an das dann in einer Copolymerisation Styrol gepfropft und
(b) Phenylisocyanat unter Bildung einer Harnstoffgruppe als Modell für die spätere kovalente Einbindung in Polyharnstoffe addiert,
IR-spektroskopisch nachgewiesen werden konnte.
In einer Folgemodifizierung wurde nach bekannter Vorschrift das PTFE-Produkt in eine Polyimidsynthese aus Diisocyanat (Gemisch MDI mit TDI = 80 : 20) und Carbonsäuredianhydrid (Benzophenontetracarbonsäuredianhydrid) in Dimethylacetamid (DMAc) eingesetzt. Nach Abtrennung der löslich Polyimid-Anteile konnte IR-spektroskopisch am PTFE gekoppeltes Polyimid nachgewiesen werden. Die verpressten PTFE-Polyimid-Produkte wiesen tribologisch sehr niedrige Reibungskoeffizienten, vergleichbar mit reinem PTFE, und eine extrem hohe Verschleißfestigkeit auf.

### Beispiel 12:

### Modifizierung von PTFE-Emulsionspolymerisat mit 1,6-Aminohexanol

In einem Literkolben werden 100 g des PTFE-Emulsionspolymerisat (TF 2025 von Dyneon, mit 500 kGy frisch bestrahlt in Gegenwart von Luftsauerstoff) in 500 ml DMAc dispergiert/gerührt, entgast und mit Reinststickstoff gespült. Es werden 20 g 1,6-Aminohexanol zugegeben und bei 100°C 4 Stunden gerührt. Das Festprodukt wird abgetrennt und erst mit DMAc und dann mit Methanol gewaschen und getrocknet.
Die IR-Auswertung des abgetrennten modifizierten PTFE-Mikropulvers ergab das als Amid chemisch gekoppelte 1,6-Aminohexanol am PTFE. In einer Folgereaktion wurde als Nachweis Phenylisocyanat gekoppelt, das dann als Urethan IR-spektroskopisch nachgewiesen werden konnte.
Das so modifizierte PTFE-Pulver wurde in einem Laborkneter mit TPU in Schmelze umgesetzt. Nach Abtrennung der löslichen TPU-Anteile konnte IR-spektroskopisch chemisch gekoppeltes TPU nachweisen, das sich nicht vom PTFE über Lösen abtrennen ließ.
Das so modifizierte PTFE-Pulver wurde in einem Laborkneter weiterhin mit PBT (1), mit PET (2) und auch mit Polyesteresterelastomer (3) in Schmelze umgesetzt Nach Abtrennung der löslichen Polyester-Anteile konnten in allen Fällen an PTFEgekoppelte Polyester IR-spektroskopisch nachgewiesen werden.
Die verpressten Materialien aus diesen Versuchen wiesen tribologisch sehr niedrige Reibungskoeffizienten, vergleichbar mit reinem PTFE, und eine sehr gute Verschleißfestigkeit gegenüber den reinen, nicht mit PTFE modifizierten Ausgangsmaterialien auf.

### Beispiel 13:

### Modifizierung von PTFE-Emulsionspolymerisat mit MDI (4,4'-Diphenylmethandiisocyanat)

In einem Literkolben werden 100 g des PTFE-Emulsionspolymerisat (TF 2025 von Dyneon, mit 500 kGy frisch bestrahlt in Gegenwart von Luftsauerstoff), getempert, so dass vorrangig -COOH-Gruppen vorliegen, in 500 ml NMP (N-Methylpyrrolidon) dispergiert/gerührt, entgast und mit Reinststickstoff gespült. Es werden 20 g MDI zugegeben und bei 200°C 8 Stunden gerührt, danach werden 10 g ε-Caprolactam zum Blockieren der freien Isocyanatgruppen zugesetzt. Das Festprodukt wird abgetrennt und erst mit DMAc und dann mit Aceton gewaschen und getrocknet.
(a) 30 Ma.-%) des modifizierten PTFE-Pulvers werden in einem Laborkneter mit TPU in Schmelze umgesetzt und anschließend das lösliche TPU abgetrennt. Am unlöslichen Anteil wurde über IR-Spektroskopie neben den PTFE-Absorptionen auch TPU nachgewiesen.
Die tribologischen Untersuchungen ergaben sehr niedrige Reibungskoeffizienten, vergleichbar mit reinem PTFE, und eine sehr gute Verschleißfestigkeit gegenüber dem reinen, nicht mit PTFE modifiziertem Ausgangsmaterial.
(b) Das modifizierte PTFE-Pulver wird in NMP dispergiert und mit MDI und Trimellitsäureanhydrid nach bekanntem Verfahren zur Polyamidimidsynthese (PAI) erst 4 Stunden bei 140°C und dann noch 8 Stunden bei 180°C unter Stickstoff und Rückflusskühlung gerührt. Nach Abtrennung der löslichen PAI-Anteile konnte am PTFE-Rückstand chemisch gekoppeltes PAI nachgewiesen werden.
Die tribologischen Untersuchungen ergaben sehr niedrige Reibungskoeffizienten, vergleichbar mit reinem PTFE, und eine sehr gute Verschleißfestigkeit gegenüber dem reinen, nicht mit PTFE modifiziertem PAI.

### Beispiel 14:

### Modifizierung von PTFE-Emulsionspolymerisat mit ε-Caprolactam mit anschließender anionischer PA-Polymerisation

In einem Literkolben werden 100 g des PTFE-Emulsionspolymerisat (TF 2025 von Dyneon, mit 500 kGy bestrahlt), mit vorrangig COF-Gruppen, in einer Schmelze/Lösung in 500 ml Reinst-ε-Caprolactam dispergiert/gerührt, entgast und mit Reinststickstoff gespült. Zum System werden unter Rühren 0,5 g Calciumhydrid zugegeben.
Die Dispersion wird langsam bis auf 180°C erwärmt. Während der Aufheizung des Reaktionssystems läuft die anionische Polymerisation ab.
Das PTFE-PA-6-Produkt wird abgetrennt.
Für die Analyse werden 2 g PTFE-PA-6-Festprodukt in Ameisensäure gelöst und die ungebundene PA-6-Matrix abgetrennt. Diese Operation wird 4-mal wiederholt. Das Festprodukt wird mit Methanol gewaschen und getrocknet. Die IR-Auswertung des abgetrennten modifizierten PTFE-Mikropulvers ergab, dass chemisch gekoppeltes PTFE-Polyamid vorliegt.

Das so, über anionische Polymerisation hergestellte PTFE-PA-6-Material wurde hinsichtlich der tribologischen Eigenschaften untersucht. Die Reibungskoeffizienten im Klötzchen/Ring-Versuch waren in erster Näherung mit reinem PTFE und dem Material aus Vergleichsbeispiel 1 vergleichbar - dagegen zeigte dieses PTFE-PA-6-(Gusspolyamid)-Material eine Erniedrigung des Verschleißwertes auf 45 % im Vergleich zur physikalischen Mischung (Vergleichsbeispiel 1).

### Beispiel 15

### Modifizierung von PTFE-Emulsionspolymerisat zum chemisch gekoppelten PTFE-Polyamidimid-Material (PTFE-PAI)

In einem 500 ml Dreihalskolben werden 50 g Polyamidimid (Torlon, Solvay) in 250 ml NMP (getrocknet) unter Rühren bei 100 °C gelöst. Zur Lösung werden 10 g PTFE-Emulsionspolymerisat (TF 2025 von Dyneon, mit 500 kGy frisch bestrahlt in Gegenwart von Luftsauerstoff) zugegeben und dispergiert/gerührt, entgast und mit Reinststickstoff gespült. Die Dispersion wird anschließend unter Rückflusserhitzung und Inertgasatmosphäre bei 200 °C 8 Stunden gerührt. Nach dem Abkühlen auf etwa 50 °C wird das Festprodukt durch Fällen in Methanol abgetrennt und getrocknet.
Zum Nachweis der Kopplung werden ca. 5 g des gefällten Festproduktes in 20 ml NMP bei 100 °C gerührt. Nach dem Abkühlen wird zentrifugiert und die überstehende Lösung dekantiert. Die Abtrennung der löslichen PAI-Anteile wird nach dieser Prozedur 5-mal wiederholt. Dann wird der Rückstand abgefrittet und mit NMP und anschließend mit Aceton gewaschen und getrocknet. Die IR-Auswertung des abgetrennten modifizierten PTFE-Mikropulvers ergab, dass PAI am PTFE nicht extrahierbar gekoppelt vorliegt.
Das verpresste PTFE-Polyamidimid-Produkt wies tribologisch sehr niedrige Reibungskoeffizienten, vergleichbar mit reinem PTFE, und eine sehr hohe Verschleißfestigkeit auf.

### Beispiel 16

### Modifizierung von PTFE-Emulsionspolymerisat zum chemisch gekoppelten PTFE-Polyamidimid-Material durch Direktsynthese

In einem 500 ml Dreihalskolben werden 250 ml NMP (getrocknet) vorgelegt und unter Rühren werden bei Raumtemperatur 10 g PTFE-Suspensionspolymerisat (TF 1750 von Dynon, mit 1000 kGy frisch bestrahlt in Gegenwart von Luftsauerstoff) und 63,5 g MDI (4,4'-Diphenylmethandiisocyanat) zugegeben und dispergiert/gerührt, entgast und mit Reinststickstoff gespült. Die Dispersion wird anschließend unter Inertgasatmosphäre bei 140 °C 1 Stunde gerührt. Danach werden 48 g TMAn (Trimellitsäureanhydrid) zugegeben und die Dispersion wird unter Rühren in Inertgasatmosphäre langsam auf 180 °C erwärmt und 8 Stunden gerührt. Nach dem Abkühlen auf etwa 50 °C wird das Festprodukt durch Fällen in Methanol abgetrennt und getrocknet.
Zum Nachweis der Kopplung werden analog Beispiel 15, ca. 5 g des gefällten Festproduktes in 20 ml NMP bei 100 °C gerührt. Nach dem Abkühlen wird zentrifugiert und die überstehende Lösung dekantiert. Die Abtrennung der löslichen PAI-Anteile wird nach dieser Prozedur 5-mal wiederholt. Dann wird der Rückstand abgefrittet und mit NMP und anschließend mit Aceton gewaschen und getrocknet. Die IR-Auswertung des abgetrennten modifizierten PTFE-Mikropulvers ergab, dass PAI am PTFE nicht extrahierbar gekoppelt vorliegt.
Das verpresste PTFE-Polyamidimid-Produkt wies wie in Beispiel 15 tribologisch sehr niedrige Reibungskoeffizienten, vergleichbar mit reinem PTFE, und eine sehr hohe Verschleißfestigkeit auf.

### Beispiel 17

### Modifizierung von PTFE-Emulsionspolymerisat zum chemisch gekoppelten PTFE-Polyimid-Material (PTFE-PI)

In einem 500 ml Dreihalskolben werden 50 g Polyimid (hergestellt aus 3,3',4,4'-Benzophenontetracarbonsäuredianhydrid und einem Gemisch aus 4,4'-Diphenylmethandiisocyanat und Toluylendiisocyanat im Verhältnis 20 : 80 in NMP) in 250 ml NMP (getrocknet) unter Rühren bei 100 °C gelöst. Zur Lösung werden 10 g PTFE-Emulsionspolymerisat (TF 2025 von Dyneon, mit 500 kGy frisch bestrahlt in Gegenwart von Luftsauerstoff) zugegeben und dispergiert/gerührt, entgast und mit Reinststickstoff gespült. Die Dispersion wird anschließend unter Rückflusserhitzung und Inertgasatmosphäre bei 200 °C 8 Stunden gerührt. Nach dem Abkühlen auf etwa 50 °C wird das Festprodukt durch Fällen in Methanol abgetrennt und getrocknet.
Zum Nachweis der Kopplung werden ca. 5 g des gefällten Festproduktes in 20 ml NMP bei 100 °C gerührt. Nach dem Abkühlen wird zentrifugiert und die überstehende Lösung dekantiert. Die Abtrennung der löslichen Polyimid-Anteile wird nach dieser Prozedur 5-mal wiederholt. Dann wird der Rückstand abgefrittet und mit NMP und anschließend mit Aceton gewaschen und getrocknet. Die IR-Auswertung des abgetrennten modifizierten PTFE-Mikropulvers ergab, dass Polyimid am PTFE nicht extrahierbar gekoppelt vorliegt.
Das verpresste PTFE-Polyimid-Produkt wies tribologisch sehr niedrige Reibungskoeffizienten, vergleichbar mit reinem PTFE, und eine sehr hohe Wärmeformbeständigkeit und Verschleißfestigkeit auf.

### Beispiel 18

### Modifizierung von PTFE-Emulsionspolymerisat zum chemisch gekoppelten PTFE-Polyimid-Material (PTFE-PI) durch Direktsynthese

In einem 500 ml Dreihalskolben werden in 250 ml NMP (getrocknet, destilliert) unter Rühren 5 g 4,4'-Diphenylmethandiisocyanat (MDI), 13,9 g und Toluylendiisocyanat (TDI; Mischung aus 2,4-TDI : 2,6-TDI = 80 : 20) und 10 g PTFE-Emulsionspolymerisat (TF 2025 von Dynon, mit 1000 kGy frisch bestrahlt in Gegenwart von Luftsauerstoff) zudosiert und bei 160 °C eine Stunde unter Reinststickstoff-Begasung gerührt. Zur Dispersion werden anschließen 32,2 g 3,3',4,4'-Benzophenontetracarbonsäuredianhydrid zugegeben. Die Dispersion wird unter Rühren und Reinststickstoff-Begasung langsam auf 180 °C erwärmt und bei 180 °C 14 Stunden gerührt. Nach dem Abkühlen auf etwa 50 °C wird das Festprodukt durch Fällen in Methanol abgetrennt und getrocknet.
Zum Nachweis der Kopplung werden ca. 5 g des gefällten Materiales in 20 ml NMP bei 100 °C gerührt. Nach dem Abkühlen wird zentrifugiert und die überstehende Lösung dekantiert. Die Abtrennung der löslichen Polyimid-Anteile wird nach dieser Prozedur 5-mal wiederholt. Dann wird der Rückstand abgefrittet und mit NMP und anschließend mit Aceton gewaschen und getrocknet. Die IR-Auswertung des abgetrennten modifizierten PTFE-Mikropulvers ergab, dass Polyimid am PTFE nicht extrahierbar gekoppelt vorliegt.
Das verpresste PTFE-Polyimid-Produkt wies wie in Beispiel 16 tribologisch sehr niedrige Reibungskoeffizienten, vergleichbar mit reinem PTFE, und eine sehr hohe Wärmeformbeständigkeit und Verschleißfestigkeit auf.

### Beispiel 19

### Modifizierung von PTFE-Emulsionspolymerisat zu chemisch gekoppeltem PTFE-Polyetheretherketon (PTFE-PEEK) durch Direktsynthese A

In einem 250 ml Dreihalskolben mit Rührer, Reinststickstoff-Begasung und Mikrodestille werden in 150 ml NMP (N-Methylpyrrolidon) 5 g p-Aminophenolmodifiziertes PTFE-Mikropulver (hergstellt nach Beispiel 10), 22,05 g 4,4'-Difluorbenzophenon, 25,45 g bis-silyliertes Hydrochinon und im Überschuss 15 g wasserfreies Kaliumcarbonat in Gegenwart von Cäsiumfluorid als Katalysator vorgelegt und nach bekannter Vorschrift der PEEK-Herstellung umgesetzt.
Analyse: 30 ml dieer Dispersion werden nach dem Abkühlen zentrifugiert, die überstehende Lösung dekantiert und erneut mit NMP aufgerührt und zentrifugiert. Anschließend wird der Feststoff mit Methanol aufgerührt, abgesaugt und getrocknet. Die Festsubstanz wird in konzentrierte Schwefelsäure eingereührt und 4 Stunden bei 50 °C gerührt und über Nacht stehen gelassen (Sulfonierung der PEEK-Ketten). Die Dispersion wird vorsichtig abgefrittet und mit halbkonzentrierter Schwefelsäure gewaschen. Nach Wechsel der Vorlage wird der Rückstand gründlich mit Wasser und Methanol gewaschen und getrocknet. Die IR-Auswertung des abgetrennten Festproduktes ergab, dass am PTFE chemisch gekoppeltes PEEK (sulfoniert) vorliegt, das nicht extrahierbar war. In einer Vergleichsumsetzung, in die anstatt des modifizierten PTFE-Mikropulvers nur das thermisch abgebaute PTFE-Mikropulver TF 9205 von Dyneon eingesetzt wurde, konnte nach Abtrennung und Reinigung des Festproduktes IR-spektroskopisch nur das reine PTFE nachgewiesen werden, was indirekt die chemische Kopplung bestätigt.
Die Hauptmenge der Dispersion aus dem Ansatz wird nach Abkühlen auf ca. 50 °C in Methanol/Wasser (1:1) gefällt, abgesaugt, mit Wasser, Methanol und Aceton gewaschen und getrocknet.

Das verpresste PTFE-PEEK-Produkt wies tribologisch sehr niederige Reibungskoeefizienten, vergleichar mit reinem PTFE, und eine sehr hohe Wärmeformbeständigkeit und Verschleißfestigkeit auf.

### Beispiel 20

### Modifizierung von PTFE-Emulsionspolymerisat zu chemisch gekoppeltem PTFE-Polyetheretherketon (PTFE-PEEK) durch Direktsynthese B

In einem 250 ml Dreihalskolben mit Rührer, Reinststickstoff-Begasung und Mikrodestille werden in 150 ml NMP 5 g frisch bestrahltes, nicht nachbehandeltes PTFE-Mikropulver (aus PTFE-Emulsionspolymerisat TF 2025 von Dyneon, mit 500 kGy frisch bestrahlt in Gegenwart von Luftsauerstoff, mit vorrangig Carbonylfluoridgruppen am PTFE), 22,05 g 4,4'-Difluorbenzophenon, 25,45 g bis-silyliertes Hydrochinon und im Überschuss 15 g wasserfreies Kaliumcarbonat in Gegenwart von Cäsiumfluorid als Katalysator vorgelegt und nach bekannter Vorschrift der PEEK-Herstellung umgesetzt.
Analyse: Aufarbeitung gemäß Beispiel 19; Die IR-Auswertung des abgetrennten Festproduktes ergab, dass analog Beispiel 19 am PTFE chemisch gekoppeltes PEEK (sulfoniert), das nicht extrahierbar war.
Die Hauptmenge der Dispersion wird gemäß Beispiel 19 aufgearbeitet
Das verpresste PTFE-PEEK-Produkt wies tribologisch sehr niedrige Reibungskoefizienten, vergleichbar mit reinem PTFE, und eine sehr hohe Wärmeformbeständigkeit und Verschleißfestigkeit auf.

### Beispiel 21

### Modifizierung von PTFE-Emulsionspolymerisat zu chemisch gekoppeltem PTFE-Polyetheretherketon (PTFE-PEEK)

In einem 500 ml Dreihalskolben mit Rührer, Reinststickstoff-Begasung und Mikrodestille werden in 150 ml Diphenylsulfon 30 g PEEK bei 320 °C unter Rühren gelöst. Die Lösung wird auf ca. 270 °C abgekühlt und es werden 5 g frisch bestrahltes, nicht nachbehandeltes PTFE-Mikropulver (aus PTFE-Emulsionspolymerisat TF 2025 von Dyneon, mit 500 kGy frisch bestrahlt in Gegenwart von Luftsauerstoff, mit vorrangig Carbonylfluoridgruppen am PTFE) zugegeben, 2 Stunden bei 270 °C und noch einmal 1 Stunde bei 320 °C gerührt. Beim Abkühlen fällt das Polymer aus.
Analyse: Nach Abkühlen der Dispersion auf ca. 180 °C werden ca. 100 ml NMP zugegeben und 50 ml dieser Dispersion werden anschließend wie in Beispiel 19 aufgearbeitet. Die IR-Auswertung des abgetrennten Festproduktes ergab chemisch gekoppeltes PEEK (sulfoniert) am PTFE, das nicht extrahierbar war.
Die Hauptmenge der mit NMP verdünnten Dispersion wird wie in Beispiel 19 aufgearbeitet.
Das verpresste PTFE-PEEK-Produkt wies tribologisch sehr niedrige Reibungskoefizienten, vergleichbar mit reinem PTFE, und eine sehr hohe Wärmeformbeständigkeit und Verschleißfestigkeit auf.

## Patentansprüche

1. Modifizierte Perfluor-Kunststoffe, bestehend aus unter Sauerstoffeinfluss strahlenchemisch mit einer Strahlendosis von größer 50 kGy und/oder plasmachemisch modifiziertem kompaktem PTFE oder modifiziertem PTFE-Pulver, deren Oberfläche gleichzeitig -COOH- und/oder -COF-Gruppen und reaktive Perfluoralkyl-(peroxy-)Radikal-Zentren aufweisen, wobei über einige oder alle Gruppen und/oder an einige oder alle Zentren durch nachfolgende Reaktionen weitere niedermolekulare und/oder oligomere und/oder polymere Substanzen und/oder olefinisch ungesättigte Monomere und/oder olefinisch ungesättigte Oligomere und/oder olefinisch ungesättigte Polymere oder deren Gemische gekoppelt sind.

2. Modifizierte PTFE-Kunststoffe nach Anspruch 1, bei denen das PTFE mit einer Strahlendosis von größer 100 kGy strahlenchemisch modifiziert ist.

3. Modifizierte PTFE-Kunststoffe nach Anspruch 1, bei denen die nachfolgenden Reaktionen Radikalreaktionen und/oder Substitutionsreaktionen und/oder Additionsreaktionen sind.

4. Modifizierte PTFE-Kunststoffe nach Anspruch 3, bei denen an die reaktiven Perfluoralkyl-(peroxy-)Radikal-Zentren olefinisch ungesättigte Monomere und/oder olefinisch ungesättigte Oligomere oder olefinisch ungesättigte Polymere durch (Co-)Polymerisation und/oder durch Pfropfung gekoppelt sind.

5. Modifizierte PTFE-Kunststoffe nach Anspruch 3, bei denen über Reaktionen mit den -COOH- und/oder -COF-Gruppen Substanz(en) an die entstandenen Ester- und/oder Amidbindungen gekoppelt sind.

6. Modifizierte PTFE-Kunststoffe nach Anspruch 5, bei denen an die Substanz(en), die über Ester- und/oder Amidbindungen gekoppelt sind, mindestens eine weitere funktionelle Gruppe gebunden ist.

7. Modifizierte PTFE-Kunststoffe nach Anspruch 3, bei denen über Reaktionen mit den -COOH- und/oder -COF-Gruppen aliphatische Aminoverbindungen und/oder aromatische Aminoverbindungen und/oder Alkylaryl-Aminoverbindungen mit mindestens einer weiteren primären und/oder sekundären Aminogruppe oder mindestens einer weiteren reaktiven oder reaktiv modifizierbaren oder reaktiv aktivierbaren funktionellen Gruppe gekoppelt sind.

8. Modifizierte PTFE-Kunststoffe nach Anspruch 7, bei denen als weitere, reaktive oder reaktiv modifizierbare oder reaktiv aktivierbare funktionelle Gruppe Carbonsäureanhydrid, Carbonsäureanhydrid-Derivat, die auch als Dicarbonsäure- und/oder Carbonsäurehalbester-Verbindung zum Anhydrid recyclisierbar sind, -COOH, -CO-Halogen, -COOR, -CO-OOR, -O-CO-OR, -SO₃H, -SO₂NRR*, - SO₂N₃, -SO₂-Halogen, aliphatische und/oder aromatische -OH, aliphatische und/oder aromomatische -SH, (Meth-)Acrylester, Allyl, und andere olefinisch ungesättigte polymerisierbare Verbindungen und/oder Polymere, Cyanhydrin, - NCO, -NH-CO-OR, -NH-CS-OR, -NR*-CO-NR**R***, -N*-CS-R**R*** -CHO, - COR gekoppelt sind, wobei R, R*, R** und/oder R*** Alkyl-Xₘ, Aryl-X" oder Alkyaryl-Xₒ bedeuten oder wobei R, R*, R** und/oder R*** an N gebunden auch H bedeuten kann und wobei X gleiche oder auch verschiedene funktionelle Gruppen bedeuten und bei m, n und o mit Zahlen größer/gleich 0 bedeuten.

9. Modifizierte PTFE-Kunststoffe nach Anspruch 3, bei denen an die reaktiven Perfluoralkyl-(peroxy-)Radikal-Zentren olefinisch ungesättigte Monomere und/oder olefinisch ungesättigte Oligomere oder olefinisch ungesättigte Polymere durch (Co-)Polymerisation und/oder durch Pfropfung gekoppelt sind und über Reaktionen mit den -COOH- und/oder -COF-Gruppen Substanz(en) an die entstandenen Ester- und/oder Amidbindungen gekoppelt sind und über Reaktionen mit den -COOH- und/oder -COF-Gruppen aliphatische Aminoverbindungen und/oder aromatische Aminoverbindungen und/oder Alkylaryl-Aminoverbindungen mit mindestens einer weiteren primären und/oder sekundären Aminogruppe oder mindestens einer weiteren reaktiven oder reaktiv modifizierbaren oder reaktiv aktivierbaren funktionellen Gruppe gekoppelt sind.

10. Verfahren zur Herstellung von modifizierten Perfluor-Kunststoffen nach mindestens einem der Ansprüche 1 bis 9, bei dem unter Sauerstoffeinfluss strahlenchemisch mit einer Strahlendosis von größer 50 kGy oder plasmachemisch modifiziertes kompaktes PTFE oder modifizierte PTFE-Pulver, die gleichzeitig -COOH- und/oder -COF-Gruppen und reaktive Perfluoralkyl-(peroxy-)Radikal-Zentren aufweisen, durch Substitutionsreaktionen und/oder durch Additionsreaktionen und/oder durch Radikalreaktionen reaktiv mit niedermolekularen und/oder oligomeren und/oder polymeren Substanzen und/oder olefinisch ungesättigten Monomeren und/oder olefinisch ungesättigten Oligomeren und/oder olefinisch ungesättigten Polymeren umgesetzt werden.

11. Verfahren nach Anspruch 10, bei dem das PTFE mit einer Strahlendosis von größer 100 kGy strahlenchemisch modifiziert wird.

12. Verfahren nach Anspruch 10, bei dem das strahlenchemisch modifizierte PTFE-Pulver durch nachfolgendes Tempern bei niedrigen Temperaturen unter Erhalt der -COF-Gruppen und der reaktiven Perfluoralkyl-(peroxy-)Radikal-Zentren behandelt wird.

13. Verfahren nach Anspruch 12, bei dem das strahlenchemisch modifizierte PTFE-Pulver durch nachfolgendes Tempern mit feuchter Luft behandelt wird.

14. Verfahren nach Anspruch 10, bei dem das strahlenchemisch modifizierte PTFE mit reaktiven Perfluoralkyl-(peroxy-)Radikal-Zentren mit olefinisch ungesättigten Monomeren und/oder olefinisch ungesättigten Oligomeren und/oder olefinisch ungesättigten Polymeren umgesetzt wird.

15. Verfahren nach Anspruch 10, bei dem die -COOH und/oder -COF-Gruppen mit niedermolekularen und/oder oligomeren und/oder polymeren Substanzen, die primäre und/oder sekundäre Aminogruppen und/oder Hydroxygruppen und/oder Amidgruppen und/oder Harnstoffgruppen und/oder Isocyanatgruppen und/oder blockierte/geschützte Isocyanatgruppen und/oder Urethangruppen und/oder Uretdiongruppen enthalten, mit mindestens einer weiteren funktionellen Gruppe im (Makro-)Molekül, die zu chemische Folgereaktionen befähigt sind, bei Temperaturen > 150°C reaktiv umgesetzt werden.

16. Verfahren nach Anspruch 15, bei dem die -COOH- und/oder -COF-Gruppen in einer reaktiven Umsetzung mit niedermolekularen und/oder oligomeren und/oder polymeren Substanzen, die primäre und/oder sekundäre Aminogruppen und/oder Hydroxygruppen enthalten, mit mindestens einer weiteren funktionellen Gruppe im (Makro-)Molekül, die zu chemische Folgereaktionen befähigt sind, bei Temperaturen > 150°C reaktiv umgesetzt werden.

17. Verfahren nach Anspruch 10, bei dem die -COOH- und/oder -COF-Gruppen in einer reaktiven Umsetzung mit niedermolekularen und/oder oligomeren und/oder polymeren Substanzen, die Hydroxygruppen und/oder Epoxygruppen enthalten, mit mindestens einer weiteren funktionellen Gruppe im (Makro-)Molekül, die zu chemische Folgereaktionen befähigt sind, bei Temperaturen > 150°C reaktiv umgesetzt werden.

18. Verfahren nach Anspruch 10, bei dem die -COF-Gruppen mit einer Lactamverbindung oder einer Alkoholverbindung umgesetzt werden.

19. Verfahren nach Anspruch 10, bei dem die -COOH und/oder -COF-Gruppen mit niedermolekularen und/oder oligomeren und/oder polymeren Substanzen, die Amidgruppen und/oder Harnstoffgruppen und/oder Isocyanatgruppen und/oder blockierte/geschützte Isocyanatgruppen und/oder Urethangruppen und/oder Uretdiongruppen enthalten, mit mindestens einer weiteren funktionellen Gruppe im (Makro-)Molekül, die zu chemische Folgereaktionen befähigt sind, bei Temperaturen ≥ 200°C reaktiv umgesetzt werden.

20. Verfahren nach Anspruch 10, bei dem das strahlenchemisch modifizierte PTFE-Pulver mit reaktiven Perfluoralkyl-(peroxy-)Radikal-Zentren mit olefinisch ungesättigten Monomeren und/oder olefinisch ungesättigten Oligomeren und/oder olefinisch ungesättigten Polymeren umgesetzt wird und die -COOH und/oder - COF-Gruppen mit niedermolekularen und/oder oligomeren und/oder polymeren Substanzen, die primäre und/oder sekundäre Aminogruppen und/oder Hydroxygruppen und/oder Amidgruppen und/oder Harnstoffgruppen und/oder Isocyanatgruppen und/oder blockierte/geschützte Isocyanatgruppen und/oder Urethangruppen und/oder Uretdiongruppen enthalten, mit mindestens einer weiteren funktionellen Gruppe im (Makro-)Molekül, die zu chemische Folgereaktionen befähigt sind, bei Temperaturen > 150°C reaktiv umgesetzt werden oder die -COOH- und/oder -COF-Gruppen in einer reaktiven Umsetzung mit niedermolekularen und/oder oligomeren und/oder polymeren Substanzen, die Hydroxygruppen und/oder Epoxygruppen enthalten, mit mindestens einer weiteren funktionellen Gruppe im (Makro-)Molekül, die zu chemische Folgereaktionen befähigt sind, bei Temperaturen > 150°C reaktiv umgesetzt werden oder die -COF-Gruppen mit einer Lactamverbindung oder einer Alkoholverbindung umgesetzt werden.

## Claims

1. Modified perfluoroplastics, composed of compact PTFE or PTFE powder respectively modified with exposure to oxygen, radiochemically with a radiation dose greater than 50 kGy and/or by plasma chemistry, where the surface of these materials simultaneously has -COOH groups and/or -COF groups and reactive perfluoroalkyl(peroxy)-free-radical centres, where further low-molecular-weight and/or oligomeric and/or polymeric substances and/or olefinically unsaturated monomers and/or olefinically unsaturated oligomers and/or olefinically unsaturated polymers or mixtures of these have been coupled by way of some or all of the groups and/or to some or all of the centres via subsequent reactions.

2. Modified PTFE plastics according to Claim 1, where the PTFE has been modified with a radiation dose greater than 100 kGy.

3. Modified PTFE plastics according to Claim 1, where the subsequent reactions are free-radical reactions and/or substitution reactions and/or addition reactions.

4. Modified PTFE plastics according to Claim 3, where olefinically unsaturated monomers and/or olefinically unsaturated oligomers or olefinically unsaturated polymers have been coupled to the reactive perfluoroalkyl(peroxy)-free-radical centres via (co)polymerization and/or via grafting.

5. Modified PTFE plastics according to Claim 3, where substance(s) has/have been coupled to the resultant ester bonds and/or amide bonds by way of reactions with the -COOH and/or -COF groups.

6. Modified PTFE plastics according to Claim 5, where at least one further functional group has been bonded to the substance(s) coupled by way of ester bonds and/or amide bonds.

7. Modified PTFE plastics according to Claim 3, where the following have been coupled by way of reactions with the -COOH groups and/or -COF groups: aliphatic amino compounds and/or aromatic amino compounds and/or alkylarylamino compounds with at least one further primary and/or secondary amino group or with at least one further reactive or reactively modifiable or reactively activatable functional group.

8. Modified PTFE plastics according to Claim 7, where the further, reactive or reactively modifiable or reactively activatable functional group coupled comprises carboxylic anhydride, carboxylic anhydride derivative, where these can also be recycled in the form of dicarboxylic acid compound and/or of carboxylic hemiester compound to give the anhydride, -COOH, -CO-halogen, -COOR, -CO-OOR, -O-CO-OR, -SO₃H, -SO₂NRR*, -SO₂N₃, -SO₂-halogen, aliphatic and/or aromatic -OH, aliphatic and/or aromatic -SH, (meth)acrylic ester, allyl, or any other olefinically unsaturated polymerizable compound and/or polymer, cyanohydrin, -NCO, -NH-CO-OR, -NH-CS-OR, -NR*-CO-NR**R***, -N*-CS-R**R***, -CHO, -COR, where R, R*, R** and/or R*** are alkyl-Xₘ, aryl-Xₙ, or alkylaryl-Xₒ, or where R, R*, R** and/or R*** bonded to N can also be H and where X are identical or different functional groups and m, n and o are numbers greater than or equal to 0.

9. Modified PTFE plastics according to Claim 3, where olefinically unsaturated monomers and/or olefinically unsaturated oligomers or olefinically unsaturated polymers have been coupled to the reactive perfluoroalkyl(peroxy)-free-radical centres via (co)polymerization and/or via grafting and substance(s) has/have been coupled to the resultant ester bonds and/or amide bonds by way of reactions with the -COOH and/or -COF groups and the following have been coupled by way of reactions with the -COOH groups and/or -COF groups: aliphatic amino compounds and/or aromatic amino compounds and/or alkylarylamino compounds with at least one further primary and/or secondary amino group or with at least one further reactive or reactively modifiable or reactively activatable functional group.

10. Process for producing modified perfluoroplastics according to at least one of Claims 1 to 9, where compact PTFE or PTFE powders which have respectively been modified with exposure to oxygen, radiochemically with a radiation dose greater than 50 kGy or by plasma chemistry, and which simultaneously have -COOH groups and/or -COF groups and reactive perfluoroalkyl(peroxy)-free-radical centres are reacted with low-molecular-weight and/or oligomeric and/or polymeric substances and/or olefinically unsaturated monomers and/or olefinically unsaturated oligomers and/or olefinically unsaturated polymers via substitution reactions and/or via addition reactions and/or via free-radical reactions.

11. Process according to Claim 10, where the PTFE is radiochemically modified with a radiation dose greater than 100 kGy.

12. Process according to Claim 10, where the radiochemically modified PTFE powder is treated via subsequent conditioning at low temperatures with retention of the -COF groups and of the reactive perfluoroalkyl(peroxy)-free-radical centres.

13. Process according to Claim 12, where the radiochemically modified PTFE powder is treated via subsequent conditioning with moist air.

14. Process according to Claim 10, carried out by reacting the radiochemically modified PTFE with reactive perfluoroalkyl(peroxy)-free-radical centres with olefinically unsaturated monomers and/or olefinically unsaturated oligomers and/or olefinically unsaturated polymers.

15. Process according to Claim 10, carried out by reacting, at temperatures > 150°C, the -COOH and/or -COF groups with low-molecular-weight and/or oligomeric and/or polymeric substances which comprise primary and/or secondary amino groups and/or hydroxy groups and/or amide groups and/or urea groups and/or isocyanate groups and/or capped/protected isocyanate groups and/or urea groups and/or uretdione groups, with at least one further functional group in the (macro)molecule, where these are capable of subsequent chemical reactions.

16. Process according to Claim 15, carried out by reacting, at temperatures > 150°C, the -COOH and/or -COF groups in a reaction with low-molecular-weight and/or oligomeric and/or polymeric substances which comprise primary and/or secondary amino groups and/or hydroxy groups, with at least one further functional group in the (macro)molecule, where these are capable of subsequent chemical reactions.

17. Process according to Claim 10, carried out by reacting, at temperatures > 150°C, the -COOH and/or -COF groups in a reaction with low-molecular-weight and/or oligomeric and/or polymeric substances which comprise hydroxy groups and/or epoxy groups, with at least one further functional group in the (macro)molecule, where these are capable of subsequent chemical reactions.

18. Process according to Claim 10, where the -COF groups are reacted with a lactam compound or with an alcohol compound.

19. Process according to Claim 10, carried out by reacting, at temperatures ≥ 200°C, the -COOH and/or -COF groups with low-molecular-weight and/or oligomeric and/or polymeric substances which comprise amide groups and/or urea groups and/or isocyanate groups and/or capped/protected isocyanate groups and/or urethane groups and/or uretdione groups, with at least one further functional group in the (macro)molecule, where these are capable of subsequent chemical reactions.

20. Process according to Claim 10, carried out by reacting the radiochemically modified PTFE powder with reactive perfluoroalkyl(peroxy)-free-radical centres with olefinically unsaturated monomers and/or olefinically unsaturated oligomers and/or olefinically unsaturated polymers, and, at temperatures > 150°C, reacting the -COOH and/or -COF groups with low-molecular-weight and/or oligomeric and/or polymeric substances which comprise primary and/or secondary amino groups and/or hydroxy groups and/or amide groups and/or urea groups and/or isocyanate groups and/or capped/protected isocyanate groups and/or urethane groups and/or uretdione groups, with at least one further functional group in the (macro)molecule, where these are capable of subsequent chemical reactions, or reacting, at temperatures > 150°C, the -COOH groups and/or -COF groups in a reaction with low-molecular-weight and/or oligomeric and/or polymeric substances which comprise hydroxy groups and/or epoxy groups, with at least one further functional group in the (macro)molecule, where these are capable of subsequent chemical reactions, or reacting the -COF groups with a lactam compound or with an alcohol compound.

## Revendications

1. Matières plastiques perfluorées modifiées, constituées de poudre de PTFE modifiée ou de PTFE compact modifié plasmachimiquement et/ou radiochimiquement avec une dose de rayonnement de plus de 50 kGy sous l'effet de l'oxygène, dont la surface comporte simultanément des groupes -COOH et/ou -COF et des centres-radicaux (peroxy)-perfluoroalkyle réactifs, par des réactions subséquentes d'autres substances de faible masse moléculaire et/ou oligomères et/ou polymères et/ou des monomères à insaturation oléfinique et/ou des oligomères à insaturation oléfinique et/ou des polymères à insaturation oléfiniques ou des mélanges de ceux-ci étant couplés par l'intermédiaire de certains ou de tous le groupes et/ou à certains ou à tous les centres.

2. Matières plastiques PTFE modifiées, selon la revendication 1, dans lesquelles le PTFE est modifié radiochimiquement avec une dose de rayonnement de plus de 100 kGy.

3. Matières plastiques PTFE modifiées, selon la revendication 1, dans lesquelles les réactions subséquentes sont des réactions radicalaires et/ou des réactions de substitution et/ou des réactions d'addition.

4. Matières plastiques PTFE modifiées, selon la revendication 3, dans lesquelles des monomères à insaturation oléfinique et/ou des oligomères à insaturation oléfinique ou des polymères à insaturation oléfinique sont couplés aux centres-radicaux (peroxy)-perfluoroalkyle réactifs par (co)-polymérisation et/ou par greffage.

5. Matières plastiques PTFE modifiées, selon la revendication 3, dans lesquelles une/des substance(s) est/sont couplée(s) aux liaisons ester et/ou amide résultantes par des réactions avec les groupes -COOH et/ou -COF.

6. Matières plastiques PTFE modifiées, selon la revendication 5, dans lesquelles au moins un autre groupe fonctionnel est lié à la/aux substance(s) qui est/sont couplée(s) par des liaisons ester et/ou amide.

7. Matières plastiques PTFE modifiées, selon la revendication 3, dans lesquelles des composés amino aliphatiques et/ou des composés amino aromatiques et/ou des composés alkylaryl-amino comportant au moins un autre groupe amino primaire et/ou secondaire ou au moins un autre groupe fonctionnel réactif ou modifiable par réaction ou activable par réaction sont couplés par des réactions avec les groupes -COOH et/ou -COF.

8. Matières plastiques PTFE modifiées, selon la revendication 7, dans lesquelles en tant qu'autre groupe fonctionnel réactif ou modifiable par réaction ou activable par réaction sont couplés un anhydride d'acide carboxylique, un dérivé d'anhydride d'acide carboxylique, qui sont également recyclables en tant que composé acide dicarboxylique et/ou hémiester d'acide carboxylique en l'anhydride, -COOH, -CO-halogène, -COOR, -CO-OOR, -0-CO-OR, -SO₃H, -SO₂NRR*, -SO₂N₃, -SO₂-halogène, -OH aliphatique et/ou aromatique, -SH aliphatique et/ou aromatique, ester (méth-)acrylique, allyle, et d'autres polymères et/ou composés polymérisables à insaturation oléfinique, la cyanhydrine, -NCO, -NH-CO-OR, -NH-CS-OR, -NR*-CO-NR**R***, -N*-CS-R**R*** -CHO, -COR, R, R*, R** et/ou R*** représentant un groupe alkyl-Xₘ, aryl-Xₙ ou alkylaryl-Xₒ et R, R*, R** et/ou R*** liés à N pouvant également représenter H et X représentant des groupes fonctionnels identiques ou bien différents et m, n et o représentant des nombres égaux/supérieurs à 0.

9. Matières plastiques PTFE modifiées, selon la revendication 3, dans lesquelles des monomères à insaturation oléfinique et/ou des oligomères à insaturation oléfinique ou des polymères à insaturation oléfinique sont couplés aux centres-radicaux (peroxy)-perfluoroalkyle réactifs par (co-)polymérisation et/ou par greffage et une/des substance(s) est/sont couplée(s) aux liaisons ester et/ou amide résultantes par des réactions avec les groupes -COOH et/ou -COF et des composés amino aliphatiques et/ou des composés amino aromatiques et/ou des composés alkylaryl-amino comportant au moins un autre groupe amino primaire et/ou secondaire ou au moins un autre groupe fonctionnel réactif ou modifiable par réaction ou activable par réaction sont couplés par des réactions avec les groupes -COOH et/ou -COF.

10. Procédé pour la production de matières plastiques perfluorées, selon au moins l'une des revendications 1 à 9, dans lequel on fait réagir de la poudre de PTFE modifiée ou du PTFE compact modifié plasmachimiquement et/ou radiochimiquement avec une dose de rayonnement de plus de 50 kGy, sous l'effet de l'oxygène, qui comportent simultanément des groupes -COOH et/ou -COF et des centres-radicaux (peroxy)-perfluoroalkyle réactifs, par des réactions de substitution et/ou par des réactions d'addition et/ou par des réactions radicalaires, par réaction avec des substances de faible masse moléculaire et/ou oligomères et/ou polymères et/ou des monomères à insaturation oléfinique et/ou des oligomères à insaturation oléfinique et/ou des polymères à insaturation oléfiniques.

11. Procédé selon la revendication 10, dans lequel le PTFE est modifié radiochimiquement avec une dose de rayonnement de plus de 100 kGy.

12. Procédé selon la revendication 10, dans lequel on traite par traitement thermique subséquent à basses températures la poudre de PTFE modifiée radiochimiquement, avec obtention des groupes -COF et des centres-radicaux (peroxy)-perfluoroalkyle réactifs.

13. Procédé selon la revendication 12, dans lequel on traite par traitement thermique subséquent avec de l'air humide la poudre de PTFE modifiée radiochimiquement.

14. Procédé selon la revendication 10, dans lequel on fait réagir du PTFE, modifié radiochimiquement, comportant des centres-radicaux (peroxy)-perfluoroalkyle réactifs, avec des monomères à insaturation oléfinique et/ou des oligomères à insaturation oléfinique et/ou des polymères à insaturation oléfiniques.

15. Procédé selon la revendication 10, dans lequel les groupes -COOH et/ou les groupes -COF sont convertis par réaction, à des températures > 150 °C, avec des substances de faible masse moléculaire et/ou oligomères et/ou polymères, qui contiennent des groupes amino primaires et/ou secondaires et/ou des groupes hydroxy et/ou des groupes amido et/ou des groupes urée et/ou des groupes isocyanate et/ou des groupes isocyanate bloqués/protégés et/ou des groupes uréthane et/ou des groupes uretdione, comportant au moins un autre groupe fonctionnel dans la (macro-)molécule, qui sont aptes à des réactions chimiques subséquentes.

16. Procédé selon la revendication 15, dans lequel les groupes -COOH et/ou les groupes -COF sont convertis par réaction, à des températures > 150 °C, dans une conversion réactive avec des substances de faible masse moléculaire et/ou oligomères et/ou polymères, qui contiennent des groupes amino primaires et/ou secondaires et/ou des groupes hydroxy, comportant au moins un autre groupe fonctionnel dans la (macro-)molécule, qui sont aptes à des réactions chimiques subséquentes.

17. Procédé selon la revendication 10, dans lequel les groupes -COOH et/ou les groupes -COF sont convertis par réaction, à des températures > 150 °C, dans une conversion réactive avec des substances de faible masse moléculaire et/ou oligomères et/ou polymères, qui contiennent des groupes hydroxy et/ou des groupes époxy, comportant au moins un autre groupe fonctionnel dans la (macro-)molécule, qui sont aptes à des réactions chimiques subséquentes.

18. Procédé selon la revendication 10, dans lequel on fait réagir les groupes -COF avec un composé de type lactame ou un composé de type alcool.

19. Procédé selon la revendication 10, dans lequel les groupes -COOH et/ou -COF sont convertis par réaction, à des températures ≥ 200 °C, avec des substances de faible masse moléculaire et/ou oligomères et/ou polymères, qui contiennent des groupes amido et/ou des groupes urée et/ou des groupes isocyanate et/ou des groupes isocyanate bloqués/protégés et/ou des groupes uréthane et/ou des groupes urétdione, comportant au moins un autre groupe fonctionnel dans la (macro-)molécule, qui sont aptes à des réactions chimiques subséquentes.

20. Procédé selon la revendication 10, dans lequel on fait réagir la poudre de PTFE modifiée radiochimiquement, comportant des centres-radicaux (peroxy)-perfluoroalkyle réactifs, avec des monomères à insaturation oléfinique et/ou des oligomères à insaturation oléfinique et/ou des polymères à insaturation oléfiniques et les groupes -COOH et/ou -COF sont convertis par réaction, à des températures > 150 °C, avec des substances de faible masse moléculaire et/ou oligomères et/ou polymères, qui contiennent des groupes amino primaires et/ou secondaires et/ou des groupes hydroxy et/ou des groupes amido et/ou des groupes urée et/ou des groupes isocyanate et/ou des groupes isocyanate bloqués/protégés et/ou des groupes uréthane et/ou des groupes urétdione, comportant au moins un autre groupe fonctionnel dans la (macro-)molécule, qui sont aptes à des réactions chimiques subséquentes, ou les groupes - COOH et/ou -COF sont convertis par réaction dans une conversion réactive, à des températures > 150 °C, avec des substances de faible masse moléculaire et/ou oligomères et/ou polymères, qui contiennent des groupes hydroxy et/ou des groupes époxy, comportant au moins un autre groupe fonctionnel dans la (macro-)molécule, qui sont aptes à des réactions chimiques subséquentes, ou on fait réagir les groupes -COF avec un composé de type lactame ou un composé de type alcool.
